# EUROPÄISCHE PATENTANMELDUNG

(11) **EP 4 541 639 A1**
(43) Veröffentlichungstag der Anmeldung: **23.04.2025**
(21) Anmeldenummer: 24206360.0
(22) Anmeldetag: 14.10.2024
(51) Int. Cl.: B60L 50/64, H01M 50/204, H01M 50/249, H01M 50/258

(54) **STAPELBARES BATTERIEMODUL UND BATTERIESYSTEM FÜR EIN BATTERIEBETRIEBENES FAHRZEUG**

(30) Priorität: 16.10.2023 DE 102023128242
(71) Anmelder: Lisa Dräxlmaier GmbH, 84137 Vilsbiburg (DE)
(72) Erfinder: STECKEL, Michael, 84137 Vilsbiburg (DE); SCHWIMMBECK, Johann, 84326 Falkenberg (DE); BLASCHKE, Christian, 84032 Landshut (DE); HOFER, Guido, 84187 Weng (DE); HOFER, Manuel, 84087 Weng (DE); HAHN, Alexander, 91341 Röttebach (DE); Seidl, Stefan, 84030 Ergolding (DE)

(57) **Zusammenfassung**

Die Offenbarung betrifft ein stapelbares Batteriemodul für ein Batteriesystem eines batteriebetriebenen Fahrzeugs, umfassend: eine Mehrzahl von Batteriezellen; ein Batteriemodulgehäuse, welches um die Mehrzahl von Batteriezellen umlaufend angeordnet ist; wobei beim Stapeln mehrerer Batteriemodule zu einem Batteriemodulstapel die Batteriemodulgehäuse der jeweiligen Batteriemodule ineinandergreifen und den Batteriemodulstapel seitlich umschließen. Gemäß einem ersten Aspekt umfasst das Batteriemodul ein oder mehrere Zentrierelemente, die an einer oder mehreren Außenseiten des Batteriemodulgehäuses angeordnet sind. Die Zentrierelemente sind ausgebildet, das gestapelte Batteriemodul in einem Gehäuse des Batteriesystems zu befestigen und zu zentrieren. Gemäß einem weiteren Aspekt weist das Batteriemodulgehäuse ein seitlich umlaufendes Federelement und ein seitlich umlaufendes Nutelement auf, welches zu dem Federelement korrespondiert, wobei beim Stapeln des Batteriemoduls mit einem weiteren Batteriemodul zu einem Batteriemodulstapel das Federelement des Batteriemoduls in das Nutelement des weiteren Batteriemoduls eingreift und einen Kühlmittelkanal zwischen dem Batteriemodul und dem weiteren Batteriemodul ausformt.

## Beschreibung

### Technisches Gebiet

Die vorliegende Erfindung betrifft das Gebiet der Batteriesysteme und batteriebetriebenen Fahrzeuge, insbesondere der elektrisch angetriebenen Fahrzeuge. Insbesondere betrifft die Erfindung ein stapelbares Batteriemodul und ein Batteriesystem für ein batteriebetriebenes Fahrzeug und ein Verfahren zum Herstellen eines solchen Batteriesystems.

### Stand der Technik

Batteriemodule bzw. Modulstapel von Batteriesystemen für batteriebetriebene Fahrzeuge werden gewöhnlich im Batteriegehäuse verschraubt oder an einem zusätzlichen Halter befestigt, der wiederum im Gehäuse verschraubt oder anderweitig fixiert wird. In beiden Fällen werden Befestigungsmittel (Schrauben) und Werkzeuge bzw. weitere Bauteile für die Montage benötigt, wodurch zusätzliche Kosten und Mehrgewicht anfallen. Das Verschrauben von Komponenten bringt sowohl bei manueller als auch bei automatisierter Montage einen erhöhten zeitlichen und materiellen Aufwand mit sich. In der Regel muss die Verschraubung bzgl. Drehmoment und Drehwinkel überwacht werden, da eine Abweichung von der ursprünglichen Auslegung der Verschraubung zu einer Beschädigung der Komponenten oder einer unzureichenden Befestigung führen kann.

Des Weiteren ist es gewünscht, möglichst geringe Ladezeiten für die Batterien zu erreichen. In diesem Fall müssen die Zellen aufgrund der entstehenden Verlustleistung und damit entstehenden Wärme aktiv gekühlt werden (die Verlustleistung steigt quadratisch mit dem Strom).

So beschreibt die CN 2 19 066 868 U einen Modulstapel, bei welchem Modulgehäuse über nicht bezifferte Zentrierelemente, welche in Zentrierschienen seitlicher Schutzplatten eingreifen, stabilisiert sind, wobei die Modulgehäuse untereinander über angesetzte Fixierlaschen fixiert sind. Auch die DE 10 2021 105 848 A1 beschreibt einen Modulstapel, bei welchem Modulgehäuse einzelner Module, die ihrerseits aus Batteriezellengruppen mit einem Zellrahmen bestehen, welche ihrerseits mittels sie durchdringende Wellen und Muttern zu dem jeweiligen Modul aneinander fixiert sind, wobei die Module an einer Oberseite zwei parallele und geradlinig verlaufende Nuten und an einer Unterseite zwei zu den Nuten komplementäre parallele und geradlinig verlaufende Federn aufweisen, welche jeweils durch Zellrahmen der einzelnen Batteriezellengruppen bereitgestellt sind, so dass mehrere derartiger Modulstapel übereinander angeordnet werden und die geradlinigen Nuten und geradlinigen Federn jeweils übereinander angeordneter Module ineinander greifen können.

### Beschreibung der Erfindung

Eine Aufgabe der Erfindung ist es daher, ein vorteilhaftes Konzept zur einfachen und sicheren Montage eines Batteriesystems für ein batteriebetriebenes Fahrzeugs zu schaffen, bei dem die oben beschriebenen Nachteile nicht auftreten.

Insbesondere ist es eine Aufgabe der Erfindung, ein Konzept zur Montage eines Batteriesystems für ein batteriebetriebenes Fahrzeugs zu schaffen, das ohne Befestigungsmittel wie zum Beispiel Schrauben, etc. und Werkzeuge zur Befestigung der Batteriemodule auskommt.

Insbesondere ist es eine weitere Aufgabe der Erfindung, ein Konzept zur Montage eines Batteriesystems für ein batteriebetriebenes Fahrzeugs zu schaffen, das eine Kühlung der Batteriezellen ermöglicht, ohne dass zusätzliche Dichtungen zum Abdichten des Kühlmittels benötigt werden.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Eine Idee der Erfindung basiert darauf, im Rahmen der Montage eines Batteriesystems für ein teilweise oder voll-elektrisches Fahrzeug einen Modulstapel, also eine verbundene Gruppe von Batteriemodulen in das Batteriegehäuse einzusetzen und in diesem zu befestigen. Der Modulstapel besitzt an den Außenseiten Zentrierelemente, welche in bzw. zwischen den Gehäuseteilen formschlüssig aufgenommen werden und den Stapel nach Schließen des Gehäuses in jede Richtung ausreichend fixieren.

Die in dieser Offenbarung beschriebenen Batteriemodule können in nahezu jedem Batteriesystem für Elektrofahrzeuge verbaut werden und die Befestigung dieser im Gehäuse ist bei jedem dieser Systeme eine Problematik, für die diese Erfindung eine Lösung aufzeigt. Dabei stehen Punkte wie Herstellungskosten, Montagedauer und -komplexität, sowie Gewichtsersparnis und eine möglichst niedrige Anzahl benötigter Bauteile im Fokus. Die hier beschriebene Befestigungsmethode bezieht sich hauptsächlich auf Batteriesysteme, deren Module ein Kunststoffgehäuse besitzen, kann aber auch für andere Werkstoffe bzw. Modulrahmentypen Anwendung finden.

Die oben genannte Befestigungsmethode mittels am Modul befindlichen Zentrierelementen bringt für die Montage eines Batteriesystems eine Zeitersparnis mit sich. Es werden keine zusätzlichen Schraubwerkzeuge und Befestigungsmittel, sowie Bauteile benötigt, was sich positiv auf die Produktionskosten und das Gesamtgewicht des Batteriesystems auswirkt. Das Reduzieren von Verschraubungen und Arbeitsschritten mindert gleichzeitig das Risiko auftretender Fehler in der Produktion. Im Falle einer Reparatur oder der Entsorgung des Batteriesystems wird das Zerlegen und damit verbunden auch das Recycling durch die beschriebene Methode vereinfacht. Die Reduktion von metallenen Kleinteilen wie Schrauben reduziert das Risiko von Kurzschlüssen in der Montage.

Eine weitere Idee der Erfindung basiert auf einem Batteriesystem für ein batteriebetriebenes Fahrzeugs und einem entsprechenden Herstellungsverfahren, das eine Kühlung der Batteriezellen ohne Verwendung von zusätzlichen Dichtungen zum Abdichten des Kühlmittels schafft. Das Batteriesystem basiert auf dem Nut-Feder-Prinzip, welches eine besondere Form der Dichtung darstellt, bei dem sowohl auf ein 2K-Spritzgussverfahren als auch eine eigentliche Dichtung verzichtet werden kann, was deutlich die Kosten senkt. Dehnen sich die Module in Folge einer Erhöhung der Temperatur aus, wird die Feder tiefer in die Nut geschoben. Die Dichtfunktion wird dadurch nicht beeinträchtigt.

Um die Öffnungen im kunststoffgespritzten Modulgehäuse zu erhalten, werden üblicherweise sogenannte "Schieber" (bewegliche Teile im Werkzeug) benötigt. Befindet sich die Öffnung am Rand des Bauteils, reicht eine Einkerbung (Ausklinkung) des Randes (im Werkzeug dargestellt durch eine Erhöhung) aus. Bei der hier vorgestellten Erfindung kann auf einen solchen Schieber verzichtet werden, was das Werkzeug vereinfacht und die Kosten senkt.

Dehnen sich die Module in Folge einer Erhöhung der Temperatur aus, wandert das Federelement tiefer in die Nut hinein. Um zu verhindern, dass diese Bewegung zu einer Veränderung der Drosselwirkung in diesem Verbindungskanal führt, befindet sich die engste Stelle des Kanals nicht am Grund der Einkerbung, sondern verläuft parallel zur Bewegungsrichtung des Federelements. Somit wird der Querschnitt an der engsten Stelle des Kanals nicht durch eine Relativbewegung zwischen Nut- und Federelement beeinflusst, wodurch ein gleichbleibender Volumenstrom gewährleistet ist.

Durch die Einsparung von Schiebern im Werkzeug lassen sich die Herstellungskosten reduzieren.

In dieser Offenbarung werden batteriebetriebene Fahrzeuge bzw. elektrisch betriebene Fahrzeuge beschrieben. Bei solchen elektrisch betriebenen Fahrzeugen (BEV, PHEV, etc.) wird die Energie für den Antrieb des Fahrzeuges einem Akkumulator (umgangssprachlich Batterie) entnommen. Die Batterie besteht meist aus mehreren parallel und seriell geschalteten Zellen. Dafür werden die Zellen gemeinhin in Modul- und diese wiederum in Batteriegehäusen fixiert. In dieser Offenbarung werden Maßnahmen vorgestellt, welche (die unterschiedlichen) Größenänderungen durch Temperaturschwankungen ausgleichen.

Des Weiteren ist es gewünscht, möglichst geringe Ladezeiten für die Batterien zu erreichen. Dafür werden die Zellen aufgrund der entstehenden Verlustleistung und damit entstehenden Wärme aktiv gekühlt (die Verlustleistung steigt quadratisch mit dem Strom), wie in dieser Offenbarung beschrieben. Besonders effektiv ist die sogenannte Direkt- oder Immersionskühlung. Dazu darf das Kühlmedium nicht leitend sein bzw. muss nicht-leitend sein. Es wird ein System beschrieben, welches einen Kühlkanal durch das Fügen von zwei Modulgehäusen und einem Kühlmittelverteiler ausbildet. In dieser Offenbarung wird ein Batteriesystem beschrieben, bei dem dieser Kühlkanal und der Kühlmittelverteiler so dicht ausgestaltet sind, dass das Kühlmedium von der einen Seite zur anderen Seite durchströmen kann, beispielsweise von vorne nach hinten (Kühlmittelverteiler) und von unten nach oben (Kühlkanal), aber auch alle anderen Kombinationen sind möglich. In dieser Offenbarung wird eine Lösung aufgezeigt, bei der zur Abdichtung des Kühlkanals und des Kühlmittelverteilers auf zusätzliche Dichtungen verzichtet werden kann. Die Lösung beruht auf dem Nut-Feder-Prinzip, bei dem die Nut-Feder-Verbindung so flexibel aufgebaut ist, dass Bauteiltoleranzen und Größenänderungen durch Temperaturschwankungen ausgeglichen werden.

Damit aus dem Kühlmittelverteiler (auch "Manifold" genannt) das Kühlmedium in den Kühlkanal gelangen kann, weist der Kühlmittelverteiler Öffnungen im Bereich des Kühlkanals auf. Idealerweise sollte aus dem Kühlmittelverteiler in jeden Kühlkanal annähernd die gleiche Menge an Kühlfluid in jeden einzelnen Kühlkanal (der durch das Fügen von zwei Modulen entsteht; mehrere Module werden zu einem String (oder Block oder Bank) gefügt) fließen. Hierzu wird eine Lösung vorgestellt, bei der der Kühlmittelverteiler im Verhältnis zu den Öffnungen in den Kühlkanälen relativ groß ist. In diesem Fall können alle Module gleich (werkzeugfallend) gefertigt werden. Auch beim Verbau der Module zu einem String braucht keine Reihenfolge der Module beachtet zu werden.

In der vorliegenden Offenbarung werden Batteriemodule und Batteriemodulstapel beschrieben.

Batteriemodule enthalten eine Vielzahl von Batteriezellen. Eine Batteriezelle bzw. Zelle ist eine elektrische oder galvanische Zelle und somit ein elektrochemischer Energiespeicher und Energiewandler. Bei der Entladung wird gespeicherte chemische Energie in elektrische Energie umgewandelt. Diese kann von einem elektrischen Verbraucher genutzt werden.

Die einzelnen Batteriemodule können übereinandergestapelt werden, um einen Batteriemodulstapel zu bilden.

HV-Batterien bestehen aus einer Vielzahl von Zellen. Diese Zellen sind zu Gruppen zusammengefasst, welche als Batteriezellgruppen oder Zellgruppen bezeichnet werden. Diese Zellgruppen werden von den CSC (Zellenüberwachungsschaltkreisen) überwacht und gebalanced, d.h. im Gleichgewicht gehalten. Die Gesamtzahl der Gruppen ergibt die Spannung der Batterie. Beispielsweise ergeben 110 Zellgruppen x 3,65V = 401,5 V, was einer 400V-Batterie entspricht. Diese Spannung multipliziert mit der Anzahl der Zellen in einer Gruppe multipliziert mit der Kapazität einer Einzelzelle (z.B. 5Ah) ergibt die Gesamtkapazität einer Batterie.

In einem Modul bzw. Batteriemodul können sich mehrere Zellgruppen befinden. Üblicherweise wird als Modul ein Gehäuse für mehrere Zellen bezeichnet. Jedoch müssen diese Zellen nicht zwangsläufig zu einer Gruppe gehören. D.h. in einem Modul können mehrere Gruppen von Zellen angeordnet sein. Eine Zellgruppe setzt sich aus einzelnen Batteriezellen zusammen, die über eine Parallelschaltung miteinander verbunden sind, sich also ein gemeinsames Spannungspotential teilen.

Gemäß einem ersten Aspekt wird die oben beschriebene Aufgabe gelöst durch ein stapelbares Batteriemodul für ein Batteriesystem eines batteriebetriebenen Fahrzeugs, umfassend: eine Mehrzahl von Batteriezellen; ein Batteriemodulgehäuse, welches um die Mehrzahl von Batteriezellen umlaufend angeordnet ist; wobei beim Stapeln mehrerer Batteriemodule zu einem Batteriemodulstapel die Batteriemodulgehäuse der jeweiligen Batteriemodule ineinandergreifen und den Batteriemodulstapel seitlich umschließen; und ein oder mehrere Zentrierelemente, die an einer oder mehreren Außenseiten des Batteriemodulgehäuses angeordnet sind, wobei die Zentrierelemente ausgebildet sind, das gestapelte Batteriemodul in einem Gehäuse des Batteriesystems zu befestigen und zu zentrieren.

Mit einem solchen stapelbaren Batteriemodul kann ein Batteriesystem montiert werden, das ohne Befestigungsmittel wie zum Beispiel Schrauben, etc. und Werkzeuge zur Befestigung der Batteriemodule auskommt, was insoweit zu einer Abweichung von der CN 2 19 066 868 U, welche angesetzte Fixierlaschen und separate Füße benötigt, und von der DE 10 2021 105 848 A1, welche die einzelnen Modulgehäuse mittel Schrauben an einem Gehäuse befestigt und ein die jeweiligen Batteriemodule insgesamt umschließende Batteriemodulgehäuse nicht offenbart, führt. Die Befestigung und gleichzeitige Zentrierung erfolgt abweichend von diesem Stand der Technik an sich insbesondere alleine durch das Eingreifen der Zentrierelemente in entsprechende Elemente am Gehäuse.

Gemäß einer beispielhaften Ausführungsform des stapelbaren Batteriemoduls sind die ein oder mehreren Zentrierelemente einstückig mit dem Batteriemodulgehäuse ausgeformt.

Dies bietet den Vorteil einer einfachen Fertigung, zum Beispiel im Spritzgussverfahren. Die daraus resultierenden Spritzgussteile sind stabil und robust.

Gemäß einer beispielhaften Ausführungsform des stapelbaren Batteriemoduls sind die ein oder mehreren Zentrierelemente ausgebildet, in entsprechende Zentriergegenelemente des Gehäuses einzugreifen.

Damit kann eine robuste Befestigung bei gleichzeitiger Zentrierung der stapelbaren Batteriemodule im Gehäuse des Batteriesystems erreicht werden.

Gemäß einer beispielhaften Ausführungsform des stapelbaren Batteriemoduls sind die Zentriergegenelemente des Gehäuses als Zentriertaschen und/oder Zentriernuten ausgeformt.

Damit können die Zentrierelemente an geeigneter Stelle in die Zentriertaschen bzw. Zentriernuten eingreifen. Die Zentriertaschen erlauben beispielsweise eine Zentrierung in zwei Dimensionen, während die Zentriernuten eine Zentrierung in einer Dimension erlauben. Somit lassen sich verschiedene Zentrierkonzepte realisieren. Die Zentrierpunkte können monodirektional oder bidirektional ausgeführt sein.

Gemäß einer beispielhaften Ausführungsform des stapelbaren Batteriemoduls sind die ein oder mehreren Zentrierelemente ausgebildet, das gestapelte Batteriemodul in dem Gehäuse des Batteriesystems in drei verschiedenen Raumdimensionen zu befestigen.

Bei Anbringung mehrerer Zentrierelemente kann eine Zentrierung des Batteriemodulstapels in allen drei Raumrichtungen im Gehäuse erfolgen.

Gemäß einer beispielhaften Ausführungsform des stapelbaren Batteriemoduls sind die ein oder mehreren Zentrierelemente kreuzförmig oder balkenförmig erhaben ausgebildet.

Bei balkenförmiger Ausformung kann eine Zentrierung entlang einer Raumrichtung, nämlich in Richtung des Balkens realisiert werden. Bei kreuzförmiger Ausformung kann eine Zentrierung entlang zweier Raumrichtungen, nämlich entlang der beiden Balken des Kreuzes realisiert werden. Allerdings kann bei kreuzförmiger Ausformung des Zentrierelements der zweite Balken auch nur zur Stabilisierung des Zentrierelements genutzt werden, ohne der Ausbildung einer Zentrierung in der zweiten Raumrichtung.

Gemäß einer beispielhaften Ausführungsform des stapelbaren Batteriemoduls ist ein jeweiliges Zentrierelement ausgebildet, das gestapelte Batteriemodul in einer Querrichtung und/oder in einer Längsrichtung der entsprechenden Außenseite des Batteriemodulgehäuses zu zentrieren.

Eine Zentrierung kann durch ein jeweiliges Zentrierelement in zwei Raumrichtungen erfolgen, nämlich in einer Querrichtung und einer Längsrichtung bezogen auf die jeweilige Außenseite des Batteriemodulgehäuses, auf der das Zentrierelement angebracht ist. Die Querrichtung bezieht sich auf die Richtung entlang der Modulwand, d.h. in Richtung des Zusammenbaus der Module. Wie oben beschrieben kann das Zentrierelement aber auch derart ausgeformt sein, dass eine Zentrierung nur in einer Raumrichtung realisiert werden kann.

Gemäß einem zweiten Aspekt wird die oben beschriebene Aufgabe gelöst durch ein Batteriesystem für ein batteriebetriebenes Fahrzeug, umfassend: eine Mehrzahl von stapelbaren Batteriemodulen gemäß dem ersten Aspekt, die zu einem Batteriemodulstapel gestapelt sind, wobei die Batteriemodulgehäuse der jeweiligen Batteriemodule ineinandergreifen und die gestapelten Batteriemodule seitlich umschließen; ein Gehäuse, welches den Batteriemodulstapel umschließt, wobei das Gehäuse eine Mehrzahl von Zentriergegenelementen umfasst, die zum Eingreifen der ein oder mehreren Zentrierelemente der Batteriemodulgehäuse ausgebildet sind, so dass der Batteriemodulstapel in dem Gehäuse befestigt und zentriert ist.

Ein solches Batteriesystem kommt ohne Befestigungsmittel wie zum Beispiel Schrauben, etc. und Werkzeuge zur Befestigung der Batteriemodule aus. Die Befestigung und gleichzeitige Zentrierung erfolgt alleine durch das Eingreifen der Zentrierelemente in die entsprechenden Zentriergegenelemente am Gehäuse.

Gemäß einer beispielhaften Ausführungsform des Batteriesystems umfasst das Gehäuse zwei oder mehrere Gehäuseteile, die zu dem Gehäuse zusammensetzbar sind, wobei beim Zusammensetzen der Gehäuseteile zu dem Gehäuse die ein oder mehreren Zentrierelemente in die entsprechenden Zentriergegenelemente des Gehäuses eingreifen und den Batteriemodulstapel in dem Gehäuse befestigen und zentrieren.

Dies bietet den Vorteil, dass das Batteriesystem leicht zusammengesetzt und wieder auseinandergenommen werden kann. Die Zentrierelemente sind leicht in die entsprechenden Zentriergegenelemente des Gehäuses steckbar und bieten eine einfache Montagemöglichkeit bei robuster und stabiler Ausführung.

Gemäß einem dritten Aspekt wird die oben beschriebene Aufgabe gelöst durch ein Verfahren zum Herstellen eines Batteriesystems für ein batteriebetriebenes Fahrzeugs, umfassend: Bereitstellen einer Mehrzahl von Batteriemodulen mit jeweils einer Mehrzahl von Batteriezellen; einem Batteriemodulgehäuse, welches um die Mehrzahl von Batteriezellen umlaufend angeordnet ist; und einem oder mehreren Zentrierelementen, die an einer oder mehreren Außenseiten des Batteriemodulgehäuses angeordnet sind; Stapeln der Batteriemodule zu einem Batteriemodulstapel, wobei beim Stapeln die Batteriemodulgehäuse der jeweiligen Batteriemodule ineinandergreifen und die gestapelten Batteriemodule seitlich umschließen; Einsetzen des Batteriemodulstapels in ein Gehäuse des Batteriesystems, wobei beim Einsetzen die Zentrierelemente der jeweiligen Batteriemodulgehäuse den Batteriemodulstapel in dem Gehäuse befestigen und zentrieren.

Mit einem solchen Verfahren lässt sich ein Batteriesystem auf einfache Weise herstellen, ohne dass Befestigungsmittel wie zum Beispiel Schrauben, etc. und Werkzeuge zur Befestigung der Batteriemodule benötigt werden. Die Befestigung und gleichzeitige Zentrierung erfolgt alleine durch das Eingreifen der Zentrierelemente in entsprechende Elemente am Gehäuse.

Gemäß einem vierten Aspekt wird die oben beschriebene Aufgabe gelöst durch ein stapelbares Batteriemodul für ein Batteriesystem eines batteriebetriebenen Fahrzeugs, umfassend: eine Mehrzahl von Batteriezellen; und ein Batteriemodulgehäuse, welches um die Mehrzahl von Batteriezellen umlaufend angeordnet ist; wobei das Batteriemodulgehäuse ein seitlich umlaufendes Federelement und ein seitlich umlaufendes Nutelement aufweist, welches zu dem Federelement korrespondiert, wobei beim Stapeln des Batteriemoduls mit einem weiteren Batteriemodul zu einem Batteriemodulstapel das Federelement des Batteriemoduls in das Nutelement des weiteren Batteriemoduls eingreift und einen Kühlmittelkanal zwischen dem Batteriemodul und dem weiteren Batteriemodul ausformt.

Mit einem solchen stapelbaren Batteriemodul kann ein Batteriesystem montiert werden, das eine effiziente Kühlung der Batteriezellen ermöglicht, ohne dass zusätzliche Dichtungen zum Abdichten des Kühlmittels benötigt werden. Die Dichtwirkung wird hier durch das Eingreifen des Federelements eines jeweiligen Batteriemoduls in das Nutelement eines benachbarten Batteriemoduls des Modulstapels erzielt.

Insbesondere die CN 219066868 U offenbart bezüglich der einzelnen Module ein Batteriemodulgehäuse mit umlaufenden Federn oder Nuten nicht. Auch die DE 10 2021 105 848 A1 offenbart eine abweichende Lösung, da die durch die einzelne Batteriezellengruppen bereitgestellten Nuten und Federn jeweils lediglich geradlinig und nicht umlaufend ausgebildet sind.

Gemäß einer beispielhaften Ausführungsform des stapelbaren Batteriemoduls ist das Federelement und/oder das Nutelement einstückig mit dem Batteriemodulgehäuse ausgeformt.

Dies bietet den Vorteil einer einfachen Fertigung, zum Beispiel im Spritzgussverfahren. Die daraus resultierenden Spritzgussteile sind stabil und robust.

Gemäß einer beispielhaften Ausführungsform des stapelbaren Batteriemoduls formt das Federelement des Batteriemoduls mit dem Nutelement des weiteren Batteriemoduls den Kühlmittelkanal zwischen dem Batteriemodul und dem weiteren Batteriemodul dicht gegenüber einem Austritt von Kühlmittel aus.

Damit wird der Vorteil erreicht, dass durch einfaches Einstecken des Federelements in das Nutelement eine geeignete Abdichtung gegen Austritt von Kühlmittel aus dem Kühlmittelkanal realisiert werden kann.

Gemäß einer beispielhaften Ausführungsform des stapelbaren Batteriemoduls formt beim Eingreifen des Federelements des Batteriemoduls in das Nutelement des weiteren Batteriemoduls das Federelement mit dem Nutelement eine Nut-Feder-Verbindung aus.

Die Nut-Feder-Verbindung ist eine Steckverbindung, die einfach durch das Stecken des Federelements eines Batteriemoduls in das Nutelement eines benachbarten Batteriemoduls im Batteriemodulstapel erzeugt werden kann. Sie verhindert, dass sich die zwei benachbarten Batteriemodule zueinander verschieben. Das Nutelement kann als eine längliche, meist rechtwinklige Vertiefung (die Nut) im Batteriemodulgehäuse ausgeformt sein. In diese Nut passt die Feder bzw. das Federelement (eine Art Positiv-Form der Nut) formschlüssig hinein.

Gemäß einer beispielhaften Ausführungsform des stapelbaren Batteriemoduls ist die Nut-Feder-Verbindung senkrecht zur Eingreifrichtung des Federelements in das Nutelement formschlüssig ausgeführt.

Damit kann eine stabile Verbindung senkrecht zur Eingreifrichtung des Federelements in das Nutelement realisiert werden.

Gemäß einer beispielhaften Ausführungsform des stapelbaren Batteriemoduls ist die Nut-Feder-Verbindung entlang der Eingreifrichtung ineinander verschiebbar ausgeführt.

Damit können Temperaturschwankungen berücksichtigt werden, bei denen sich das Federelement in dem Nutelement ausdehnen und zusammenziehen kann. Die Verbindung ist damit robust und bruchunempfindlich.

Gemäß einer beispielhaften Ausführungsform des stapelbaren Batteriemoduls weist das Nutelement eine Einkerbung auf, welche beim Eingreifen des Federelements in das Nutelement die Verbindung vom Kühlmittelverteiler zum Kühlmittelkanal zwischen dem Batteriemodul und dem weiteren Batteriemodul ausbildet.

In dieser Einkerbung kann der Kühlmittelkanal ausgebildet werden, während an den restlichen Stellen eine dichte Verbindung zwischen den beiden Batteriemodulen erzielt werden kann, die insbesondere dicht gegenüber einem Kühlmittelaustritt ist.

Gemäß einem fünften Aspekt wird die oben beschriebene Aufgabe gelöst durch ein Batteriesystem für ein batteriebetriebenes Fahrzeug, umfassend: eine Mehrzahl von stapelbaren Batteriemodulen gemäß dem vierten Aspekt, die zu einem Batteriemodulstapel gestapelt sind, wobei jeweils das Federelement eines Batteriemoduls in das Nutelement eines entsprechenden weiteren Batteriemoduls eingreift und einen Kühlmittelkanal zwischen dem Batteriemodul und dem weiteren Batteriemodul ausformt; und ein Gehäuse, welches den Batteriemodulstapel umschließt und gegen ein Austreten von Kühlmittel sichert.

Ein solches Batteriesystem ermöglicht eine effiziente Kühlung der Batteriezellen, ohne dass zusätzliche Dichtungen zum Abdichten des Kühlmittels benötigt werden. Die Dichtwirkung wird hier durch das Eingreifen des Federelements eines jeweiligen Batteriemoduls in das Nutelement eines benachbarten Batteriemoduls des Batteriemodulstapels erzielt.

Gemäß einer beispielhaften Ausführungsform des Batteriesystems umfasst das Batteriesystem: einen Kühlmittelverteiler zum Einleiten des Kühlmittels in die Kühlmittelkanäle der stapelbaren Batteriemodule; wobei ein Querschnitt des Kühlmittelverteilers, über welche das Kühlmittel in die Kühlmittelkanäle zwischen den Batteriemodulen einleitbar ist, um ein Vielfaches größer ist als ein Querschnitt der jeweiligen Kühlmittelkanäle zwischen den Batteriemodulen.

Mit einer solchen Dimensionierung wird ein gleichmäßiger Kühlmittelfluss erreicht, bei dem alle Batteriezellen in gleicher Weise gekühlt werden und es zu keinen Temperaturdifferenzen abhängig vom Einbauplatz der Batteriezellen kommt.

Gemäß einem sechsten Aspekt wird die oben beschriebene Aufgabe gelöst durch ein Verfahren zum Herstellen eines Batteriesystems für ein batteriebetriebenes Fahrzeugs, umfassend: Bereitstellen einer Mehrzahl von Batteriemodulen mit jeweils einer Mehrzahl von Batteriezellen; und einem Batteriemodulgehäuse, welches um die Mehrzahl von Batteriezellen umlaufend angeordnet ist, wobei das Batteriemodulgehäuse ein seitlich umlaufendes Federelement und ein seitlich umlaufendes Nutelement aufweist, welches zu dem Federelement korrespondiert; und Stapeln des Batteriemoduls mit einem weiteren Batteriemodul zu einem Batteriemodulstapel, wobei beim Stapeln das Federelement des Batteriemoduls in das Nutelement des weiteren Batteriemoduls eingreift und einen Kühlmittelkanal zwischen dem Batteriemodul und dem weiteren Batteriemodul ausformt.

Mit einem solchen Verfahren lässt sich ein Batteriesystem herstellen, das eine effiziente Kühlung der Batteriezellen ermöglicht, ohne dass zusätzliche Dichtungen zum Abdichten des Kühlmittels benötigt werden. Die Dichtwirkung wird hier durch das Eingreifen des Federelements eines jeweiligen Batteriemoduls in das Nutelement eines benachbarten Batteriemoduls des Modulstapels erzielt.

### Kurze Figurenbeschreibung

Im Folgenden wird die Erfindung anhand von Ausführungsbeispielen und den Figuren näher beschrieben. Es zeigen:
- Fig. 1: eine 3D-Darstellung eines erfindungsgemäßen stapelbaren Batteriemoduls 100 mit Zentrierelementen in einer Querrichtung 111a und/oder einer Längsrichtung 111b gemäß einem Ausführungsbeispiel;
- Fig. 2: eine 3D-Darstellung eines erfindungsgemäßen Gehäuses 300 eines Batteriesystems mit Zentriergegenelementen gemäß einem Ausführungsbeispiel, bei dem der obere Gehäuseteil 301 dargestellt ist;
- Fig. 3: eine 3D-Darstellung eines erfindungsgemäßen Batteriesystems 400 mit Batteriemodulstapel 150 und unterem Gehäuseteil 302 gemäß einem Ausführungsbeispiel;
- Fig. 4: eine Schnittdarstellung des Batteriemodulstapels 150 im unteren Gehäuseteil;
- Fig. 5: eine 3D-Darstellung des Batteriemoduls 100 im geschlossenen Gehäuse;
- Fig. 6: eine 3D-Darstellung des Batteriesystems 400 zur Veranschaulichung des Zentrierkonzepts Modulstapel im Gehäuse;
- Fig. 7: eine schematische Darstellung eines erfindungsgemäßen Verfahrens 500 zum Herstellen eines Batteriesystems für ein batteriebetriebenes Fahrzeug;
- Fig. 8: eine 3D-Darstellung eines erfindungsgemäßen Batteriesystems 900 mit zwei beispielhaften stapelbaren Batteriemodulen 800 gemäß einem Ausführungsbeispiel;
- Fig. 9: eine 3D-Darstellung des Kühlmittelverteilers 805 und Durchbruch zum Kühlmittelkanal 801 zwischen den zwei Batteriemodulen 800 aus Figur 8 gemäß einem Ausführungsbeispiel;
- Fig. 10a: eine 3D-Darstellung des Batteriemoduls 800 aus Figur 8 mit Darstellung des Nutelements 820 gemäß einem Ausführungsbeispiel;
- Fig. 10b: eine 3D-Darstellung des Batteriemoduls 800 aus Figur 8 mit Darstellung des Federelements 830 gemäß einem Ausführungsbeispiel;
- Fig. 10c: eine 3D-Darstellung des Batteriemoduls 800 aus Figur 8 mit Darstellung der Ausbildung des Kühlmittelverteilers 805 und Durchbruch zum Kühlmittelkanal 801 zwischen Nutelement 820 und Federelement 830 gemäß einem Ausführungsbeispiel;
- Fig. 11a: eine 3D-Darstellung des Batteriemoduls 800 aus Figur 8 mit Darstellung der Nut-Feder-Verbindung gemäß einem Ausführungsbeispiel;
- Fig. 11b: eine vergrößerte Darstellung der Nut-Feder-Verbindung aus Figur 11a;
- Fig. 12a-c: 3D-Darstellungen der Nut-Feder-Verbindung und Ausbildung des Kühlmittelverteilers 805 und Durchbruch zum Kühlmittelkanal 801 zwischen Nutelement 820 und Federelement 830 zweier gestapelter Batteriemodule 800 gemäß einem Ausführungsbeispiel; und
- Fig. 13: eine schematische Darstellung eines erfindungsgemäßen Verfahrens 1300 zum Herstellen eines Batteriesystems für ein batteriebetriebenes Fahrzeug.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

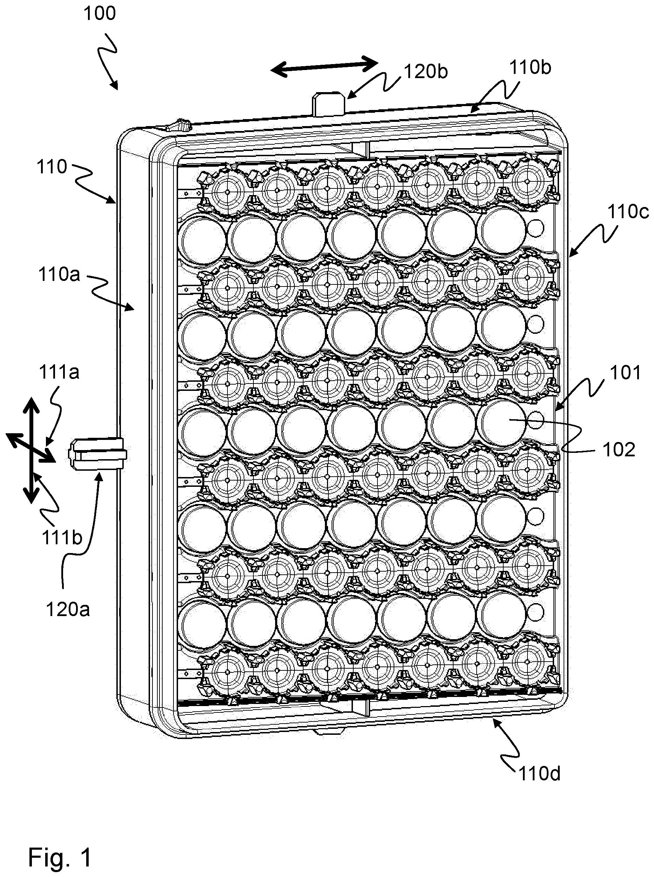

Fig. 1 zeigt eine 3D-Darstellung eines erfindungsgemäßen stapelbaren Batteriemoduls 100 mit Zentrierelementen in einer Querrichtung 111a und/oder in einer Längsrichtung 111b gemäß einem Ausführungsbeispiel. Die Querrichtung 111a bezieht sich hierbei auf eine Modul-Zusammenbaurichtung entlang der Modulwand. Die Längsrichtung 111b zeigt dann in der Figur 1 in vertikale Richtung.

Das Batteriemodul 100 umfasst eine Mehrzahl von Batteriezellen 102, die zu einer Mehrzahl von Batteriezellgruppen zusammengefasst sind. Eine Batteriezelle ist eine elektrische oder galvanische Zelle und somit ein elektrochemischer Energiespeicher und Energiewandler. Bei der Entladung wird gespeicherte chemische Energie in elektrische Energie umgewandelt. Diese kann von einem elektrischen Verbraucher genutzt werden. Die Batteriezellen 102 können beispielsweise als Rundzellen 102 bzw. zylindrische Zellen ausgeformt sein, wie in Figur 1 beispielhaft dargestellt. Alternativ können sie auch als prismatische Zellen oder Pouch-Zellen ausgeformt sein oder auch gemäß einem anderen Zelltyp.

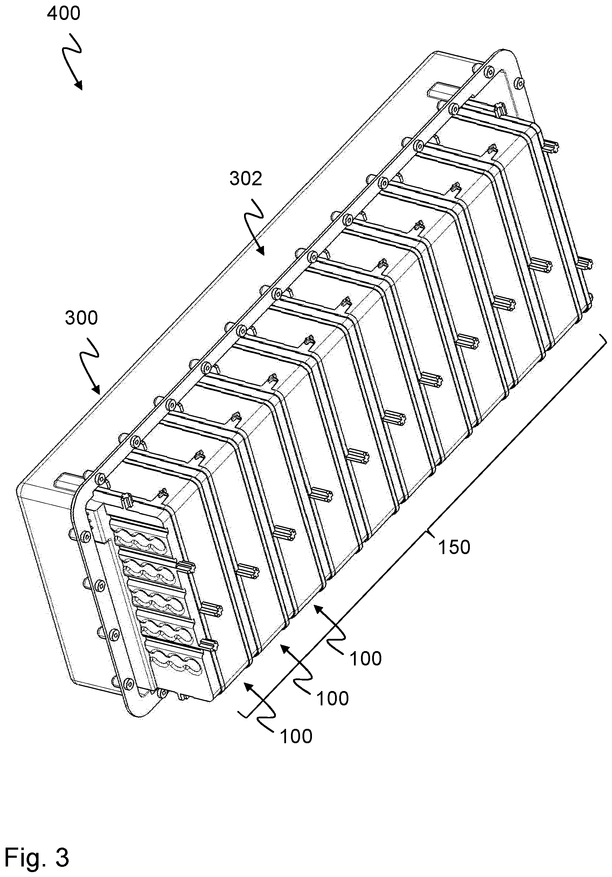

In dem Beispiel der Figur 1 umfasst das Batteriemodul 100 eine Anzahl von 7 Batteriezellen 102 pro Gruppe, die in 11 Reihen zusammengefasst sind. Die einzelnen Batteriemodule 100 können übereinandergestapelt werden, um einen Batteriemodulstapel 150 zu bilden, wie beispielhaft in Figur 3 dargestellt. Werden beispielsweise 10 solcher Batteriemodule 100 übereinandergestapelt, so umfasst der Batteriemodulstapel eine Anzahl von 10 mal 11 = 110 Zellgruppen, was einer 400V-Batterie entspricht. Die Batteriezellen 102 können zusammengefügt und von einem Batteriemodulgehäuse 110 umschlossen sein, das gleichzeitig als Träger für die Batteriezellen 102 dient.

Das stapelbare Batteriemodul 100 in Figur 1 ist für ein Batteriesystem 400 eines batteriebetriebenen Fahrzeugs. Das stapelbare Batteriemodul 100 umfasst eine Mehrzahl von Batteriezellen 102; ein Batteriemodulgehäuse 110, welches um die Mehrzahl von Batteriezellen 102 umlaufend bzw. ringsum angeordnet ist. Das Batteriemodulgehäuse 110 kann beispielsweise als ein Rahmen ausgebildet sein, welcher die Batteriezellen 102 seitlich einrahmt. Beim Stapeln mehrerer Batteriemodule 100 zu einem Batteriemodulstapel 150 greifen die Batteriemodulgehäuse 110 der jeweiligen Batteriemodule 100 ineinander und umschließen den Batteriemodulstapel 150 seitlich.

Das stapelbare Batteriemodul 100 umfasst ein oder mehrere Zentrierelemente 120a, 120b, die an einer oder mehreren Außenseiten 110a, 1 10b, 110c, 110d des Batteriemodulgehäuses 110 angeordnet sind. Die Zentrierelemente 120a, 120b sind ausgebildet, das gestapelte Batteriemodul 100 in einem Gehäuse 300 des Batteriesystems 400 zu befestigen und zu zentrieren.

Die Zentrierelemente 120a, 120b können einstückig mit dem Batteriemodulgehäuse 110 ausgeformt sein, beispielsweise als ein einziges Spritzgussteil.

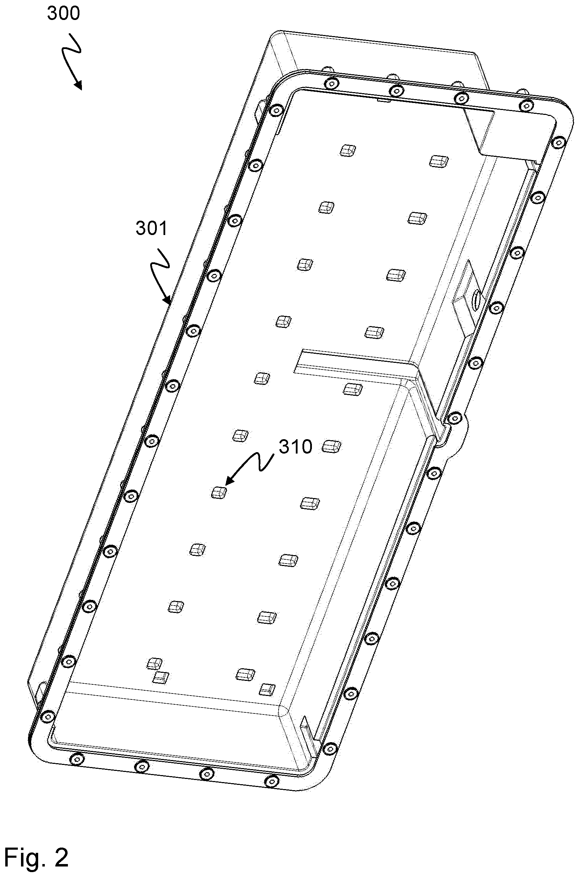

Die Zentrierelemente 120a, 120b sind ausgebildet, in entsprechende Zentriergegenelemente 310 des Gehäuses 300 einzugreifen, wie beispielsweise in Figur 2 dargestellt. Diese Zentriergegenelemente 310 des Gehäuses 300 können zum Beispiel als Zentriertaschen und/oder Zentriernuten ausgeformt sein, wie in Figur 2 dargestellt.

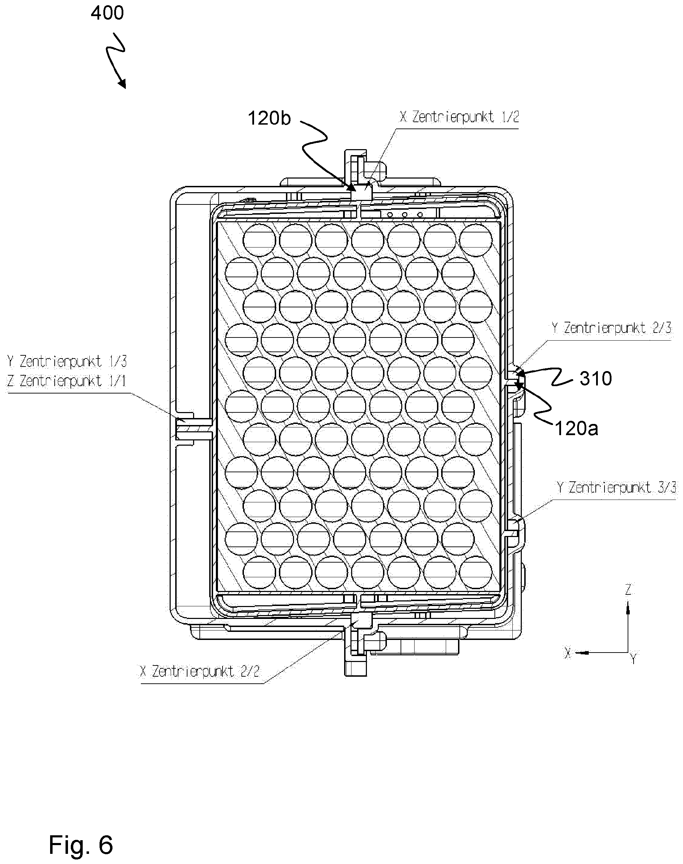

Die verschiedenen Zentrierelemente 120a, 120b sind beispielsweise ausgebildet, das gestapelte Batteriemodul 100 in dem Gehäuse 300 des Batteriesystems 400 in drei verschiedenen Raumdimensionen zu befestigen. Ein entsprechendes Zentrierkonzept ist in Figur 6 näher beschrieben.

Die ein oder mehreren Zentrierelemente 120a, 120b können kreuzförmig oder balkenförmig erhaben ausgebildet sein. Als kreuzförmig gelten hier auch Halbkreuze oder in irgendeiner Art zwei gekreuzte Balken verschiedener oder gleicher Längen und Formen.

Ein jeweiliges Zentrierelement 120a ist ausgebildet, das gestapelte Batteriemodul 100 in einer Querrichtung 111a und/oder in einer Längsrichtung 111b der entsprechenden Außenseite 110a des Batteriemodulgehäuses 110 zu zentrieren. Die Zentrierelemente 120a, 120b sind in Figur 1 an verschiedenen Außenseiten 110a, 110b, 110c, 110d des Batteriemodulgehäuses 110 angeordnet, so dass eine Befestigung und Zentrierung in drei unterschiedlichen Raumrichtungen erfolgen können.

Die in Figur 1 dargestellten Batteriemodule 100, welche aus Kunststoff gefertigt sein können, besitzen an den Außenseiten 110a, 110b, 110c, 110d Zentrierpunkte, hier als Zentrierelemente 120a, 120b bezeichnet, an denen das Batteriemodul 100 später vom Gehäuse 300 gegriffen werden kann, wie beispielsweise in Figur 3 dargestellt.

Fig. 2 zeigt eine 3D-Darstellung eines erfindungsgemäßen Gehäuses 300 eines Batteriesystems mit Zentriergegenelementen gemäß einem Ausführungsbeispiel, bei dem der obere Gehäuseteil 301 dargestellt ist.

In diesem Beispiel umfasst das Gehäuse 300 ein oberes Gehäuseteil 301, das in Figur 2 beispielhaft dargestellt ist, und ein unteres Gehäuseteil 302, das in Figur 3 beispielhaft dargestellt ist.

Das Gehäuse 300, welches sich aus zwei oder mehr Teilen 301, 302 zusammensetzt, besitzt im Inneren eine Geometrie (zum Beispiel Taschen oder Nuten), die ein Gegenstück zu den Zentrierpunkten des Modules darstellt.

Allgemein gesprochen sind die ein oder mehreren Zentrierelemente 120a, 120b ausgebildet, in entsprechende Zentriergegenelemente 310 des Gehäuses 300 einzugreifen. Diese Zentriergegenelemente 310 des Gehäuses 300 können als Zentriertaschen und/oder Zentriernuten ausgeformt sein.

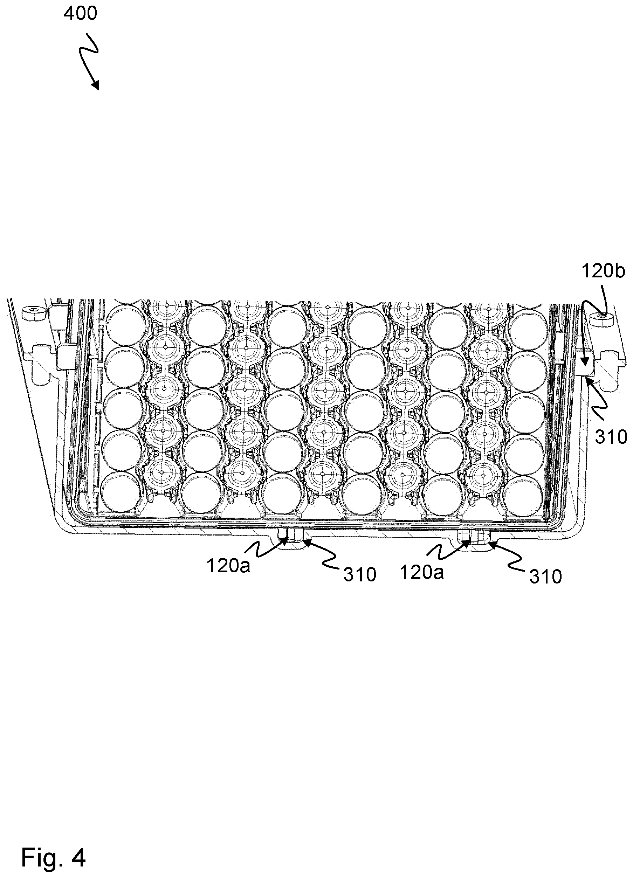

Beim Einsetzen des Modulstapels 150 in den unteren Teil 302 des Gehäuses 300, wie in den Figuren 3 und 4 dargestellt, findet sich ein Teil der Zentrierpunkte bzw. Zentrierelemente 120a, 120b der Batteriemodule 100 in den Gegenstücken bzw. Zentriergegenelementen 310 im Gehäuse 300 wieder und fixiert den Batteriemodulstapel 150 bereits in zwei Dimensionen.

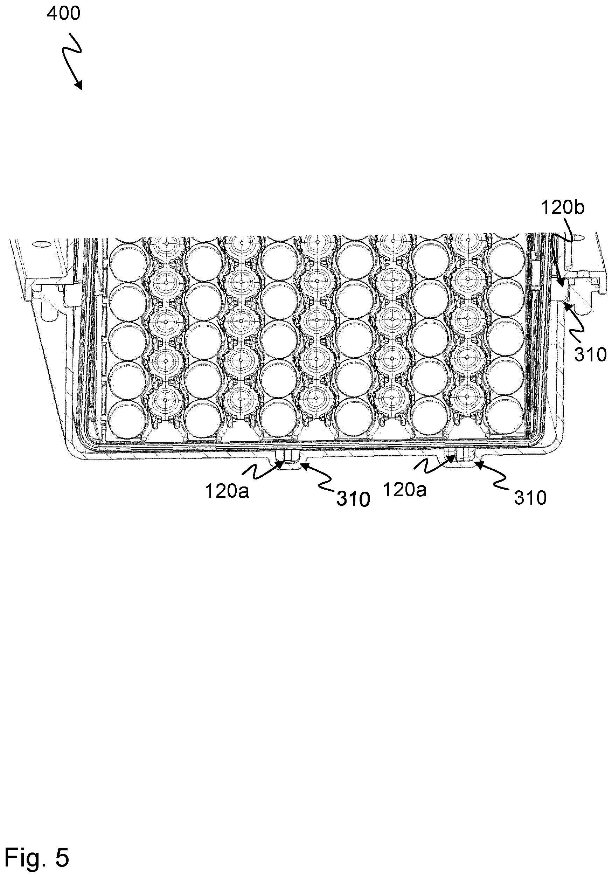

Durch das Schließen des Gehäuses 300 bzw. das Aufsetzen des oberen Gehäuseteiles 301 (siehe Figur 2) wird der Rest der Zentrierpunkte bzw. Zentrierelemente 120a, 120b am Batteriemodul 100 fixiert, wie in Figur 5 dargestellt. Zwischen den Gehäuseteilen 301, 302 können ebenfalls Zentrierpunkte bzw. Zentrierelemente formschlüssig in Position gehalten werden, wodurch der Batteriemodulstapel 150 auch in Gehäuse-Fügerichtung befestigt ist, sobald die Gehäuseteile 301, 302 zueinander fixiert sind, beispielsweise durch Verschraubungen oder anderweitig, wie in Figur 5 dargestellt.

Der Modulstapel ist dadurch anhand der Zentrierpunkte bzw. Zentrierelemente 120a, 120b in allen drei Dimensionen fixiert, wie in Figur 6 näher dargestellt. Ein Zentrierpunkt 120a, 120b, welcher in einer Tasche bzw. in einem Zentriergegenelement 310 im Gehäuse 300 sitzt, kann dabei je nach Ausführung Kräfte in eine oder auch in mehrere Richtungen aufnehmen. Zum Zerlegen und Entnehmen des Batteriemodulstapels 150, beispielsweise bei Reparatur oder Entsorgung, muss lediglich das obere Gehäuseteil 301 vom unteren Gehäuseteil 302 getrennt werden. Anschließend kann der Batteriemodulstapel 150 ohne weitere Schritte aus dem unteren Gehäuseteil 302 herausgehoben werden.

Das in den Figuren 3 bis 6 dargestellte Batteriesystem 400 für ein batteriebetriebenes Fahrzeug umfasst: eine Mehrzahl von stapelbaren Batteriemodulen 100 wie oben Figur 1 beschrieben, die zu einem Batteriemodulstapel 150 gestapelt sind, wobei die Batteriemodulgehäuse 110 der jeweiligen Batteriemodule 100 ineinandergreifen und die gestapelten Batteriemodule 100 seitlich umschließen, wie detailliert in Figur 3 dargestellt.

Das Batteriesystem 400 umfasst ein Gehäuse 300, welches den Batteriemodulstapel 150 umschließt, wobei das Gehäuse 300 eine Mehrzahl von Zentriergegenelementen 310 umfasst, die zum Eingreifen der ein oder mehreren Zentrierelemente 120a, 120b der Batteriemodulgehäuse 110 ausgebildet sind, so dass der Batteriemodulstapel 150 in dem Gehäuse 300 befestigt und zentriert ist.

Das Gehäuse 300 umfasst beispielsweise zwei oder mehrere Gehäuseteile 301, 302, die zu dem Gehäuse 300 zusammensetzbar sind. Beim Zusammensetzen der Gehäuseteile 301, 302 zu dem Gehäuse 300 greifen die ein oder mehreren Zentrierelemente 120a, 120b in die entsprechenden Zentriergegenelemente 310 des Gehäuses 300 ein und befestigen und zentrieren den Batteriemodulstapel 150 in dem Gehäuse 300.

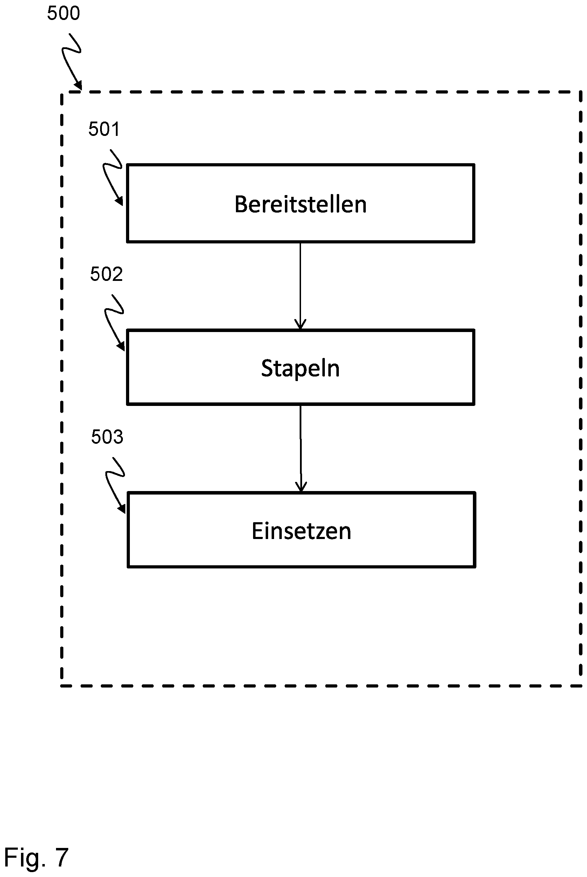

Fig. 7 zeigt eine schematische Darstellung eines erfindungsgemäßen Verfahrens 500 zum Herstellen eines Batteriesystems für ein batteriebetriebenes Fahrzeug.

Das Verfahren 500 umfasst ein Bereitstellen 501 einer Mehrzahl von Batteriemodulen 100 mit jeweils einer Mehrzahl von Batteriezellen 102; einem Batteriemodulgehäuse 110, welches um die Mehrzahl von Batteriezellen 102 umlaufend angeordnet ist; und einem oder mehreren Zentrierelementen 120a, 120b, die an einer oder mehreren Außenseiten 110a, 110b, 110c, 110d des Batteriemodulgehäuses 110 angeordnet sind, wie beispielsweise in den Figuren 1 bis 6 beschrieben.

Das Verfahren 500 umfasst ein Stapeln 502 der Batteriemodule 100 zu einem Batteriemodulstapel 150, wobei beim Stapeln 502 die Batteriemodulgehäuse 110 der jeweiligen Batteriemodule 100 ineinandergreifen und die gestapelten Batteriemodule 100 seitlich umschließen, wie beispielsweise in den Figuren 1 bis 6 beschrieben.

Das Verfahren 500 umfasst ein Einsetzen 503 des Batteriemodulstapels 150 in ein Gehäuse 300 des Batteriesystems 400, wobei beim Einsetzen die Zentrierelemente 120a, 120b der jeweiligen Batteriemodulgehäuse 110 den Batteriemodulstapel 150 in dem Gehäuse 300 befestigen und zentrieren, wie beispielsweise in den Figuren 1 bis 6 beschrieben.

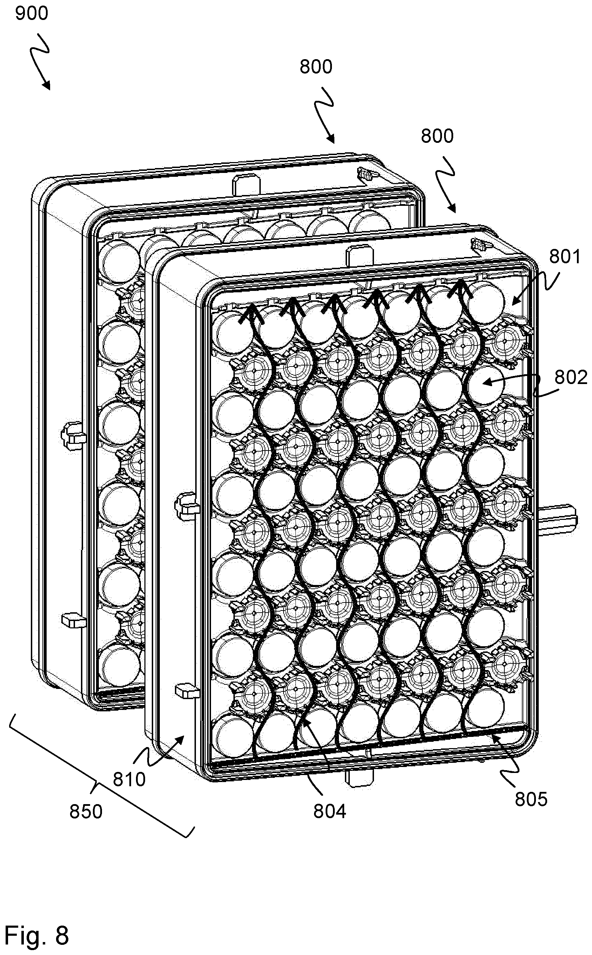

Fig. 8 zeigt eine 3D-Darstellung eines erfindungsgemäßen Batteriesystems 900 mit zwei beispielhaften Batteriemodulen 800 gemäß einem Ausführungsbeispiel.

Das Batteriesystem 900 umfasst eine Mehrzahl von stapelbaren Batteriemodulen 800, die zu einem Batteriemodulstapel 850 gestapelt werden können. In Figur 8 ist eine beispielhafte Anzahl von zwei solcher Batteriemodule 800 dargestellt, die beide gleich ausgeführt sein können.

Das stapelbare Batteriemodul 800 umfasst: eine Mehrzahl von Batteriezellen 802; und ein Batteriemodulgehäuse 810, welches um die Mehrzahl von Batteriezellen 802 umlaufend angeordnet ist. Die Batteriezellen 802 können in gleicher Art ausgeführt sein wie die oben zu den Figuren 1 bis 6 beschriebenen Batteriezellen 102. Ebenfalls das Batteriemodulgehäuse 810 kann analog zu dem in den Figuren 1 bis 6 beschriebenen Batteriemodulgehäuse 110 ausgeführt sein. Die Mehrzahl von Batteriezellen 802 können direkt von dem Batteriemodulgehäuse 810 umschlossen sein, welches als Träger für die Batteriezellen 802 dient. In Figur 8 umfasst das Batteriemodulgehäuse 810 jedoch eine andere Anzahl an Batteriezellen 802 (nämlich 8x5=40 als Beispiel) als das in Figur 1 dargestellte Batteriemodulgehäuse 110.

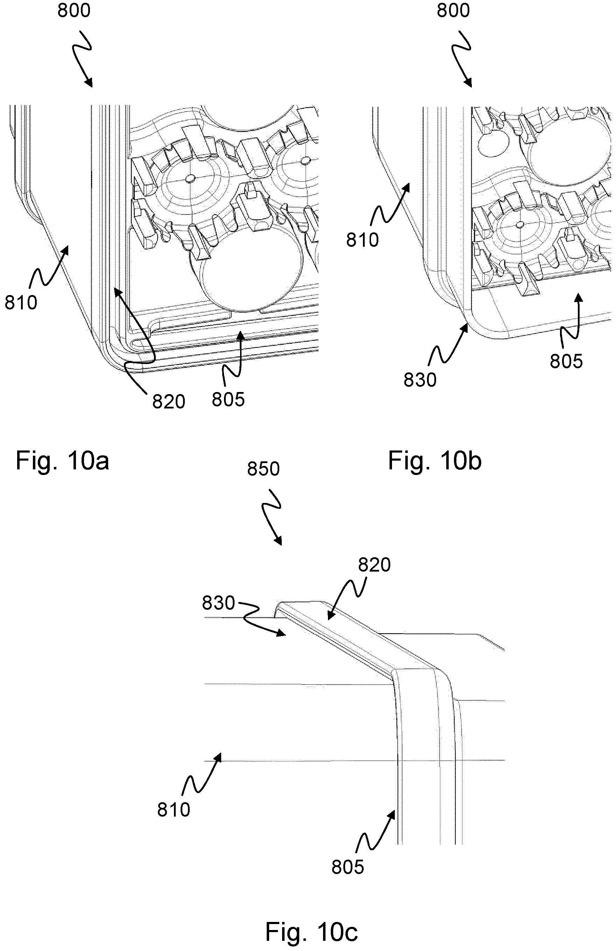

Das Batteriemodulgehäuse 810 weist ein seitlich umlaufendes Federelement 830 und ein seitlich umlaufendes Nutelement 820 auf, welches zu dem Federelement 830 korrespondiert, wie in den Figuren 10a bis 12d näher beschrieben.

Beim Stapeln des Batteriemoduls 800 mit einem (oder mehreren) weiteren Batteriemodul 800 zu einem Batteriemodulstapel 850 greift das Federelement 830 eines Batteriemoduls 800 in das Nutelement 820 eines weiteren Batteriemoduls 800 ein. Ein Kühlmittelkanal 801 wird zwischen dem Batteriemodul 800 und dem weiteren Batteriemodul 800 ausgebildet.

Der Kühlmittelverteiler 805 kann beispielsweise auf einer Unterseite des Batteriemoduls 800 ausgebildet sein, wie in Figur 8 beispielhaft dargestellt. Über den Kühlmittelverteiler 805 kann Kühlmittel 804 in das Batteriemodul 800 strömen und über den Kühlkanal 801 über die Batteriezellen 802 strömen, um diese zu kühlen, wie anhand der gebogenen Pfeile schematisch dargestellt.

Mit dem hier beschriebenen Batteriesystem 900 können die Batteriezellen 802 aufgrund der entstehenden Verlustleistung und damit entstehenden Wärme aktiv gekühlt werden, so dass möglichst geringe Ladezeiten für das Batteriesystem erreichbar sind. Das Batteriesystem 900 kann dazu eine sogenannte Direkt- oder Immersionskühlung nutzen, bei der das Kühlmedium 804 elektrisch nicht-leitend ist.

In dem Batteriesystem 900 wird ein Kühlkanal 801 durch das Fügen von zwei Batteriemodulgehäusen 810 und einem Kühlmittelverteiler (nicht dargestellt) ausbildet. Der Kühlkanal 801 und der Kühlmittelverteiler 805 sind so dicht ausgestaltet, dass das Kühlmedium 804 von der einen Seite zur anderen Seite durch das Batteriesystem hindurchströmen kann, beispielsweise von vorne nach hinten (Kühlmittelverteiler 805) und von unten nach oben (Kühlkanal 801), wie in Figur 8 dargestellt. Auch alle anderen Kombinationen sind möglich.

In diesem Batteriesystem 900 kann zur Abdichtung des Kühlkanals 801 und des Kühlmittelverteilers 805 auf zusätzliche Dichtungen verzichtet werden. Die Lösung beruht auf dem Nut-Feder-Prinzip, bei dem die Nut-Feder-Verbindung so flexibel aufgebaut ist, dass Bauteiltoleranzen und Größenänderungen durch Temperaturschwankungen ausgeglichen werden, wie in den folgenden Figuren 10a bis 12d näher beschrieben.

Das in Figur 8 dargestellte Batteriesystem 900 kann für ein batteriebetriebenes Fahrzeug eingesetzt werden. Es umfasst: eine Mehrzahl von stapelbaren Batteriemodulen 800, die zu einem Batteriemodulstapel 850 gestapelt sind, wobei jeweils das Federelement 830 (in Figur 10b und 10c näher dargestellt) eines Batteriemoduls 800 in das Nutelement 820 (in Figur 10a und 10c näher dargestellt) eines entsprechenden weiteren Batteriemoduls 800 eingreift. Ein Kühlmittelkanal 801 wird zwischen dem Batteriemodul 800 und dem weiteren Batteriemodul 800 ausgeformt. Das Batteriesystem 900 umfasst zudem ein Gehäuse (nicht in den Figuren dargestelt), welches den Batteriemodulstapel 150 umschließt und gegen ein Austreten von Kühlmittel 804 sichert.

Das Batteriesystem 900 umfasst zudem einen Kühlmittelverteiler 805, auch als "Manifold" bezeichnet, zum Einleiten des Kühlmittels 804 in die Kühlmittelkanäle 801 zwischen den stapelbaren Batteriemodulen 800.

Dabei kann ein Querschnitt des Kühlmittelverteilers 805, über welche das Kühlmittel 804 in die Kühlmittelkanäle 801 zwischen den Batteriemodulen 800 einleitbar ist, um ein Vielfaches größer sein als ein Querschnitt der jeweiligen Kühlmittelkanäle 801 zwischen den Batteriemodulen 800.

Wie bereits oben beschrieben, weist ein solcher Kühlmittelverteiler 805 Öffnungen im Bereich des Kühlkanals 801 auf, damit aus dem Kühlmittelverteiler 805 das Kühlmedium bzw. Kühlmittel 804 in den Kühlkanal 801 gelangen kann. Idealerweise sollte aus dem Kühlmittelverteiler 805 in jeden Kühlkanal 801 annähernd die gleiche Menge an Kühlfluid bzw. Kühlmittel 804 in jeden einzelnen Kühlkanal 801 fließen. Hierzu ist der Kühlmittelverteiler 805 im Verhältnis zu den Öffnungen in den Kühlkanälen 801 relativ groß dimensioniert. Dann können alle Batteriemodule 800 auf vorteilhafte Weise gleichartig (werkzeugfallend) gefertigt sein. Auch beim Verbau der Module, d.h. der Batteriemodule 800 zu einem String braucht keine Reihenfolge der Module 800 beachtet zu werden.

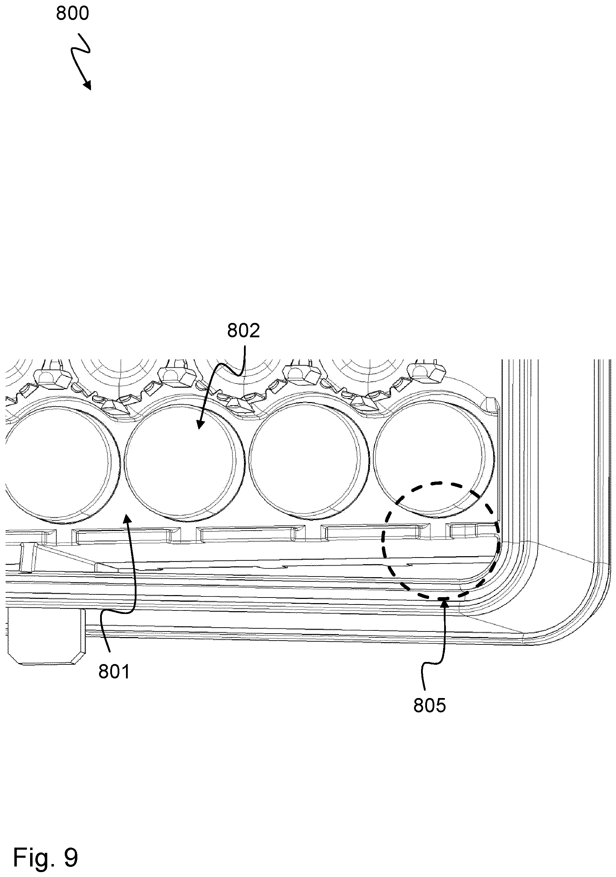

Fig. 9 zeigt eine 3D-Darstellung des Kühlmittelverteilers 805 und Durchbruch zum Kühlmittelkanal 801 zwischen den zwei Batteriemodulen 800 aus Figur 8 gemäß einem Ausführungsbeispiel.

Ein Kühlmittelverteiler 805 ist ausgebildet, Kühlmittel 804 in die Kühlmittelkanäle 801 zwischen den stapelbaren Batteriemodulen 800 einzuleiten.

Dabei kann ein Querschnitt des Kühlmittelverteilers 805, über welche das Kühlmittel 804 in die Kühlmittelkanäle 801 zwischen den Batteriemodulen 800 einleitbar ist, ein Vielfaches größer sein als ein Querschnitt der jeweiligen Kühlmittelkanäle 801 zwischen den Batteriemodulen 800.

Wie in Figur 8 dargestellt werden die Zuführungen bzw. die Kühlkanäle 801 für das Kühlmittel 804 in die Batteriemodulgehäuse 810 integriert.

Bei der Montage werden die Zuführungen ineinandergesteckt. Im Bereich des Hohlraums sind die Zuführungen offen, so dass das Kühlmittel 804 in den Hohlraum strömen kann.

Fig. 10a zeigt eine 3D-Darstellung des Batteriemoduls 800 aus Figur 8 mit Darstellung des Nutelements 820 gemäß einem Ausführungsbeispiel und Fig. 10b zeigt eine 3D-Darstellung des Batteriemoduls 800 aus Figur 8 mit Darstellung des Federelements 830 gemäß einem Ausführungsbeispiel. Fig. 10c zeigt eine 3D-Darstellung des Batteriemoduls 800 aus Figur 8 mit Darstellung der Ausbildung des Kühlmittelverteilers 805 und Durchbruch zum Kühlmittelkanal 801 zwischen Nutelement 820 und Federelement 830 gemäß einem Ausführungsbeispiel.

Ein stapelbares Batteriemodul 800 für ein Batteriesystem 900, wie in den Figuren 8 und 9 beschrieben, umfasst: eine Mehrzahl von Batteriezellen 802; und ein Batteriemodulgehäuse 810, welches um die Mehrzahl von Batteriezellen 802 umlaufend angeordnet ist. Das Batteriemodulgehäuse 810 weist ein seitlich umlaufendes Federelement 830 und ein seitlich umlaufendes Nutelement 820 auf, welches zu dem Federelement 830 korrespondiert.

Wie oben beschrieben, greift beim Stapeln des Batteriemoduls 800 mit einem weiteren Batteriemodul 800 zu einem Batteriemodulstapel 850 das Federelement 830 des Batteriemoduls 800 in das Nutelement 820 des weiteren Batteriemoduls 800 ein. Ein Kühlmittelkanal 801 wird durch das Batteriemodul 800 und das weitere Batteriemodul 800 ausgebildet.

Das Federelement 830 und/oder das Nutelement 820 können einstückig mit dem Batteriemodulgehäuse 810 ausgeformt sein, beispielsweise als ein einziges Spritzgussteil gefertigt sein.

Das Federelement 830 des Batteriemoduls 800 und das Nutelement 820 des weiteren Batteriemoduls 800 bilden die Wand des Kühlmittelverteilers 805. Der Kühlmittelkanal 801 wird von den beiden angrenzenden Modulen gebildet.

Beim Eingreifen des Federelements 830 des Batteriemoduls 800 in das Nutelement 820 des weiteren Batteriemoduls 800 kann das Federelement 830 mit dem Nutelement 820 eine Nut-Feder-Verbindung ausformen.

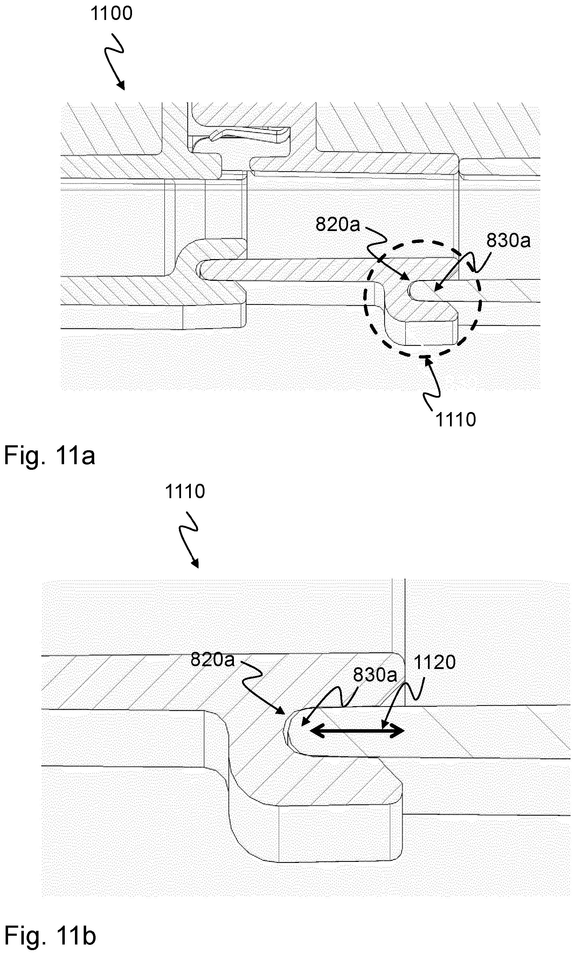

Diese Nut-Feder-Verbindung kann senkrecht zur Eingreifrichtung 1120 des Federelements 830 (siehe Figur 11a, 11b) in das Nutelement 820 formschlüssig ausgeführt sein.

Die Nut-Feder-Verbindung kann entlang der Eingreifrichtung 1120 ineinander verschiebbar ausgeführt sein, so dass sich bei Temperaturanstieg das Batteriemodulgehäuse ausdehnen und dadurch das Federelement 830 weiter in das Nutelement 820 wandern kann.

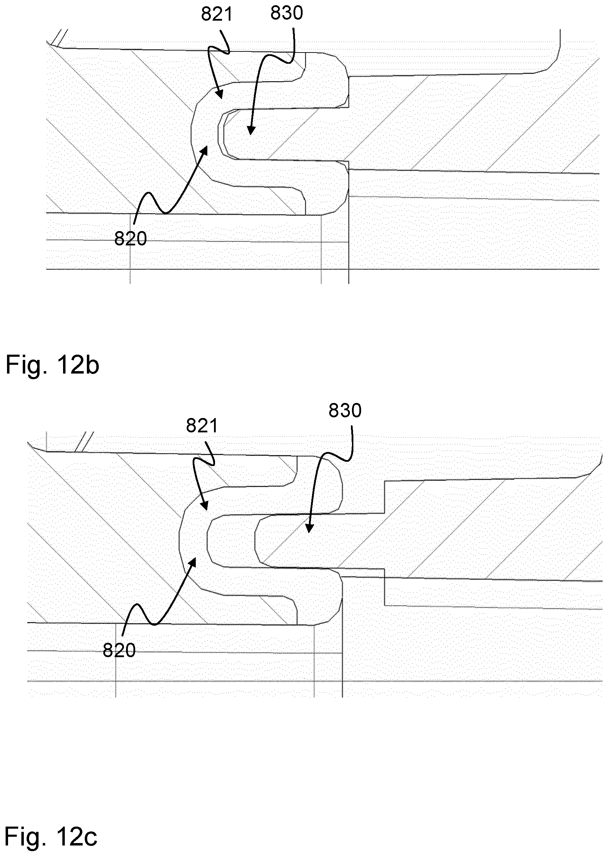

Das Nutelement 820 kann eine Einkerbung 821 aufweisen, wie in den Figuren 12b bis 12d näher dargestellt, welche beim Eingreifen des Federelements 830 in das Nutelement 820 den Kühlmittelkanal 801 zwischen dem Batteriemodul 800 und dem weiteren Batteriemodul 800 ausbildet. Damit wird der Kühlmittelkanal 801 zwischen den Batteriemodulen 800 ausgeformt und gleichzeitig eine Abdichtung der Batteriemodule 800 nach außen erreicht.

Fig. 11a zeigt eine 3D-Darstellung des Batteriemoduls 800 aus Figur 8 mit Darstellung der Nut-Feder-Verbindung 1110 gemäß einem Ausführungsbeispiel. Fig. 11b zeigt eine vergrößerte Darstellung der Nut-Feder-Verbindung 1110 aus Figur 11a. Insbesondere geht es in den Figuren 11a und 11b um die äußere Abdichtung des Modulstapels und somit auch des Kühlmittelverteilers.

Es ist dargestellt, wie ein Federelement 830a eines Batteriemodul 800 in das Nutelement 820a eines benachbarten Batteriemoduls 800 eingreift und die beiden Batteriemodule 800 einen Kühlmittelkanal ausbilden. Die Eingreifrichtung 1120, in der das Batteriemodul 800 in ein weiteres benachbartes Batteriemodul 800 eingreift, um die Nut-Feder-Verbindung 1110 auszuformen, ist mit dem Pfeil 1120 gekennzeichnet.

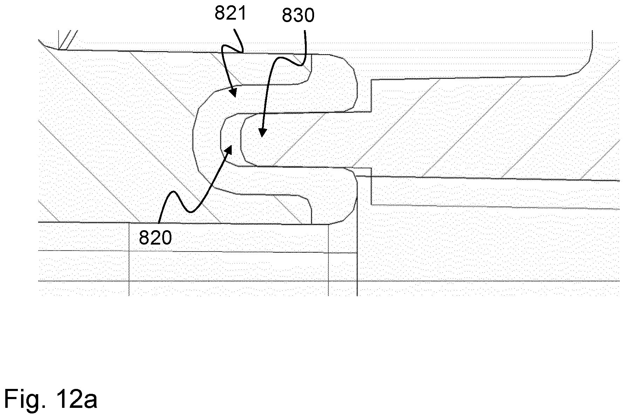

Figuren 12a, 12b und 12c zeigen 3D-Darstellungen einer Nut-Feder-Verbindung 820, 830 und Ausbildung des Kühlmittelverteilers 805 und Durchbruch zum Kühlmittelkanal 801 zwischen Nutelement 820 und Federelement 830 zweier gestapelter Batteriemodule 800 gemäß einem Ausführungsbeispiel.

Zur Verdeutlichung des Effekts des gleichbleibenden Querschnitts zeigt Figur 12a die Ausgangslage, Figur 12b den Zustand bei temperaturbedingter Ausdehnung und Figur 12c den Zustand bei temperaturbedingter Kontraktion.

Es handelt sich dabei nicht um das gleiche Nut-Feder-System wie in den Figuren 11a und 11b dargestellt. Während es in den Figuren 11a und 11b um die äußere Abdichtung des Modulstapels und somit auch des Kühlmittelverteilers geht, zeigen die Figuren 12a-c die Trennung zwischen Kühlmittelverteiler und Kühlmittelkanal, ebenfalls mit Nut und Feder abgedichtet. Nur dieses Nutelement 820 in den Figuren 12a-c besitzt die Aussparungen, um Kühlmittel gezielt durchfließen zu lassen.

Das Federelement 830 eines Batteriemoduls 800 greift in das Nutelement 820 eines benachbarten Batteriemoduls 800 ein. Der Kühlmittelverteiler 805 und Durchbruch zum Kühlmittelkanal 801 wird zwischen den beiden Batteriemodulen 800 ausgebildet.

Das Nutelement 820 weist eine Einkerbung bzw. Aussparung 821 auf, welche beim Eingreifen des Federelements 830 in das Nutelement 820 den Kühlmittelverteiler 805 und Durchbruch zum Kühlmittelkanal 801 zwischen dem Batteriemodul 800 und dem weiteren Batteriemodul 800 ausbildet. An den anderen Stellen zwischen Federelement 830 und Nutelement 820 ist die Nut-Feder-Verbindung dicht, so dass kein Kühlmittel 804 nach außen abfließen kann.

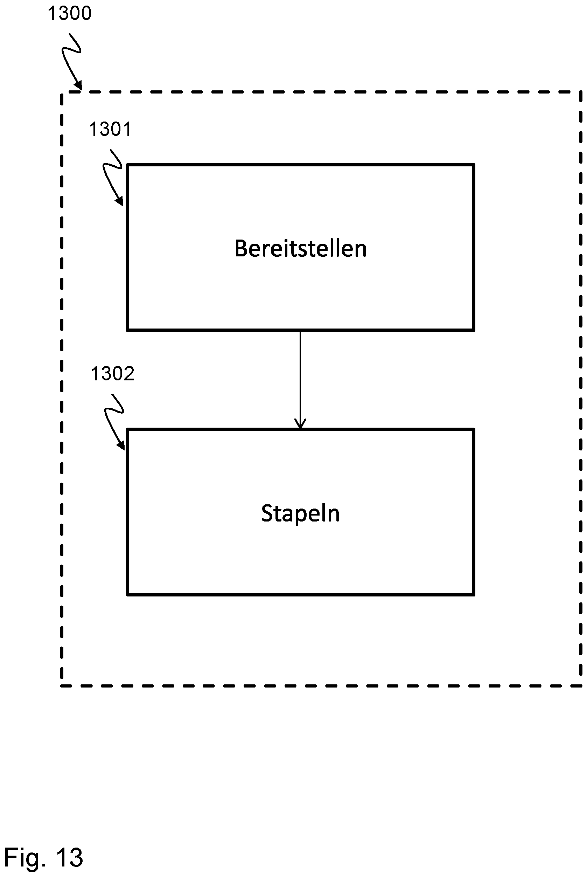

Fig. 13 zeigt eine schematische Darstellung eines erfindungsgemäßen Verfahrens 1300 zum Herstellen eines Batteriesystems für ein batteriebetriebenes Fahrzeug.

Das Verfahren 1300 umfasst ein Bereitstellen 1301 einer Mehrzahl von Batteriemodulen 800 mit jeweils einer Mehrzahl von Batteriezellen 802; und einem Batteriemodulgehäuse 810, welches um die Mehrzahl von Batteriezellen 802 umlaufend angeordnet ist, wobei das Batteriemodulgehäuse 810 ein seitlich umlaufendes Federelement 830 und ein seitlich umlaufendes Nutelement 820 aufweist, welches zu dem Federelement 830 korrespondiert, wie oben zu den Figuren 8 bis 12 dargestellt.

Das Verfahren 1300 umfasst ein Stapeln 1302 des Batteriemoduls 800 mit einem weiteren Batteriemodul 800 zu einem Batteriemodulstapel 850, wobei beim Stapeln 1302 das Federelement 830 des Batteriemoduls 800 in das Nutelement 820 des weiteren Batteriemoduls 800 eingreift und ein Kühlmittelkanal 801 zwischen dem Batteriemodul (800) und dem weiteren Batteriemodul 800 ausgebildet wird, wie oben zu den Figuren 8 bis 12 dargestellt.

### BEZUGSZEICHENLISTE

- 100: stapelbares Batteriemodul
- 102: Batteriezelle
- 110: Batteriemodulgehäuse
- 110a-d: Außenseiten des Batteriemodulgehäuses
- 111a: Querrichtung, d.h. entlang der Modulwand
- 111b: Längsrichtung
- 120a, b: Zentrierelemente
- 150: Batteriemodulstapel

- 300: Gehäuse des Batteriesystems
- 310: Zentriergegenelemente am Gehäuse

- 400: Batteriesystem

- 500: Verfahren zum Herstellen eines Batteriesystems
- 501: erster Schritt: Bereitstellen
- 502: zweiter Schritt: Stapeln
- 503: dritter Schritt: Einsetzen

- 800: stapelbares Batteriemodul
- 801: Kühlmittelkanal
- 802: Batteriezelle
- 810: Batteriemodulgehäuse
- 850: Batteriemodulstapel
- 820: Nutelement
- 830: Federelement
- 820a: Nutelement
- 830a: Federelement
- 804: Kühlmittel
- 805: Kühlmittelverteiler
- 821: Einkerbung bzw. Aussparung des Nutelements 820
- 900: Batteriesystem

- 1110: Nut-Feder-Verbindung
- 1120: Eingreifrichtung, in der das Batteriemodul 800 in ein weiteres benachbartes Batteriemodul 800 eingreift

- 1300: Verfahren zum Herstellen eines Batteriesystems
- 1301: erster Schritt: Bereitstellen
- 1302: zweiter Schritt: Stapeln

## Patentansprüche

1. Stapelbares Batteriemodul (100, 800) für ein Batteriesystem (400) eines batteriebetriebenen Fahrzeugs, wobei das stapelbare Batteriemodul (100, 800)
eine Mehrzahl von Batteriezellen (102, 802); und
ein Batteriemodulgehäuse (110, 810), welches um die Mehrzahl von Batteriezellen (102, 802) umlaufend angeordnet ist;
umfasst und **dadurch gekennzeichnet ist,**
(i) **dass** beim Stapeln mehrerer Batteriemodule (100) zu einem Batteriemodulstapel (150) die Batteriemodulgehäuse (110) der jeweiligen Batteriemodule (100) ineinandergreifen und den Batteriemodulstapel (150) seitlich umschließen; und
ein oder mehrere Zentrierelemente (120a, 120b), die an einer oder mehreren Außenseiten (110a, 110b, 110c, 11 0d) des Batteriemodulgehäuses (110) angeordnet sind, wobei die Zentrierelemente (120a, 120b) ausgebildet sind, das gestapelte Batteriemodul (100) in einem Gehäuse (300) des Batteriesystems (400) zu befestigen und zu zentrieren; und/oder
(ii) **dass** wobei das Batteriemodulgehäuse (810) ein seitlich umlaufendes Federelement (830) und ein seitlich umlaufendes Nutelement (820) aufweist, welches zu dem Federelement (830) korrespondiert,
wobei beim Stapeln des Batteriemoduls (800) mit einem weiteren Batteriemodul (800) zu einem Batteriemodulstapel (850) das Federelement (830) des Batteriemoduls (800) in das Nutelement (820) des weiteren Batteriemoduls (800) eingreift und ein Kühlmittelkanal (801) durch das Batteriemodul (800) und das weitere Batteriemodul (800) gebildet wird.

2. Stapelbares Batteriemodul (100) nach Anspruch 1,
wobei die ein oder mehreren Zentrierelemente (120a, 120b) einstückig mit dem Batteriemodulgehäuse (110) ausgeformt sind.

3. Stapelbares Batteriemodul (100) nach Anspruch 1 oder 2,
wobei die ein oder mehreren Zentrierelemente (120a, 120b) ausgebildet sind, in entsprechende Zentriergegenelemente (310) des Gehäuses (300) einzugreifen wobei die Zentriergegenelemente (310) des Gehäuses (300) insbesondere als Zentriertaschen und/oder Zentriernuten ausgeformt sind.

4. Stapelbares Batteriemodul (100) nach einem der vorstehenden Ansprüche,
wobei die ein oder mehreren Zentrierelemente (120a, 120b) ausgebildet sind, das gestapelte Batteriemodul (100) in dem Gehäuse (300) des Batteriesystems (400) in drei verschiedenen Raumdimensionen zu befestigen.

5. Stapelbares Batteriemodul (100) nach einem der vorstehenden Ansprüche,
wobei die ein oder mehreren Zentrierelemente (120a, 120b) kreuzförmig oder balkenförmig erhaben ausgebildet sind.

6. Stapelbares Batteriemodul (100) nach einem der vorstehenden Ansprüche,
wobei ein jeweiliges Zentrierelement (120a) ausgebildet ist, das gestapelte Batteriemodul (100) in einer Querrichtung (111a) und/oder in einer Längsrichtung (111b) der entsprechenden Außenseite (110a) des Batteriemodulgehäuses (110) zu zentrieren.

7. Stapelbares Batteriemodul (100) nach einem der vorstehenden Ansprüche ,
wobei das Federelement (830) und/oder das Nutelement (820) einstückig mit dem Batteriemodulgehäuse (810) ausgeformt ist.

8. Stapelbares Batteriemodul (100) nach einem der vorstehenden Ansprüche ,
wobei das Federelement (830) des Batteriemoduls (800) mit dem Nutelement (820) des weiteren Batteriemoduls (800) eine Wand eines Kühlmittelverteilers (805) zum Verteilen von Kühlmittel durch den Kühlmittelkanal (810) bilden,
wobei beim Eingreifen des Federelements (830) des Batteriemoduls (800) in das Nutelement (820) des weiteren Batteriemoduls (800) das Federelement (830) mit dem Nutelement (820) insbesondere eine Nut-Feder-Verbindung ausformt, die vorzugsweise senkrecht zur Eingreifrichtung (1120) des Federelements (830) in das Nutelement (820) formschlüssig ausgeführt ist und/oder die vorzugsweise entlang der Eingreifrichtung (1120) ineinander verschiebbar ausgeführt ist.

9. Stapelbares Batteriemodul (100) nach Anspruch 8,
wobei das Nutelement (820) eine Einkerbung (821) aufweist, welche beim Eingreifen des Federelements (830) in das Nutelement (820) eine Verbindung von dem Kühlmittelverteiler (805) zu dem Kühlmittelkanal (801) zwischen dem Batteriemodul (800) und dem weiteren Batteriemodul (800) ausbildet.

10. Batteriesystem (400) für ein batteriebetriebenes Fahrzeug, umfassend:
eine Mehrzahl von stapelbaren Batteriemodulen (100) gemäß einem der Ansprüche 1 bis 9, die zu einem Batteriemodulstapel (150) gestapelt sind, wobei die Batteriemodulgehäuse (110) der jeweiligen Batteriemodule (100) ineinandergreifen und die gestapelten Batteriemodule (100) seitlich umschließen;
ein Gehäuse (300), welches den Batteriemodulstapel (150) umschließt, wobei das Gehäuse (300) eine Mehrzahl von Zentriergegenelementen (310) umfasst, die zum Eingreifen der ein oder mehreren Zentrierelemente (120a, 120b) der Batteriemodulgehäuse (110) ausgebildet sind, so dass der Batteriemodulstapel (150) in dem Gehäuse (300) befestigt und zentriert ist,
wobei vorzugsweise das Gehäuse (300) zwei oder mehrere Gehäuseteile (301, 302) umfasst, die zu dem Gehäuse (300) zusammensetzbar sind und sowie beim Zusammensetzen der Gehäuseteile (301, 302) zu dem Gehäuse (300) die ein oder mehreren Zentrierelemente (120a, 120b) in die entsprechenden Zentriergegenelemente (310) des Gehäuses (300) eingreifen und den Batteriemodulstapel (150) in dem Gehäuse (300) befestigen und zentrieren.

11. Batteriesystem (900) für ein batteriebetriebenes Fahrzeug, umfassend:
eine Mehrzahl von stapelbaren Batteriemodulen (800) gemäß einem der Ansprüche 1 bis 9, die zu einem Batteriemodulstapel (850) gestapelt sind, wobei jeweils das Federelement (830) eines Batteriemoduls (800) in das Nutelement (820) eines entsprechenden weiteren Batteriemoduls (800) eingreift und ein Kühlmittelkanal (801) zwischen dem Batteriemodul (800) und dem weiteren Batteriemodul (800) gebildet wird; und
ein Gehäuse, welches den Batteriemodulstapel (150) umschließt und gegen ein Austreten von Kühlmittel (804) sichert.

12. Batteriesystem (900) nach Anspruch 11, umfassend:
einen Kühlmittelverteiler (805) zum Einleiten des Kühlmittels (804) in die Kühlmittelkanäle (801) der stapelbaren Batteriemodule (800);
wobei ein Querschnitt des Kühlmittelverteilers (805), über welche das Kühlmittel (804) in die Kühlmittelkanäle (801) zwischen den Batteriemodulen (800) einleitbar ist, um ein Vielfaches größer ist als ein Querschnitt der jeweiligen Kühlmittelkanäle (801) zwischen den Batteriemodulen (800).

13. Verfahren (1300) zum Herstellen eines Batteriesystems (900) für ein batteriebetriebenes Fahrzeugs, umfassend:
Bereitstellen (1301) einer Mehrzahl von Batteriemodulen (800) mit jeweils einer Mehrzahl von Batteriezellen (802); und einem Batteriemodulgehäuse (810), welches um die Mehrzahl von Batteriezellen (802) umlaufend angeordnet ist, wobei das Batteriemodulgehäuse (810) ein seitlich umlaufendes Federelement (830) und ein seitlich umlaufendes Nutelement (820) aufweist, welches zu dem Federelement (830) korrespondiert;
Stapeln (1302) des Batteriemoduls (800) mit einem weiteren Batteriemodul (800) zu einem Batteriemodulstapel (850), wobei beim Stapeln (1302) das Federelement (830) des Batteriemoduls (800) in das Nutelement (820) des weiteren Batteriemoduls (800) eingreift und ein Kühlmittelkanal (801) zwischen dem Batteriemodul (800) und dem weiteren Batteriemodul (800) gebildet wird.

14. Verfahren (500) zum Herstellen eines Batteriesystems (400) für ein batteriebetriebenes Fahrzeugs, umfassend:
Bereitstellen (501) einer Mehrzahl von Batteriemodulen (100) mit jeweils einer Mehrzahl von Batteriezellen (102); einem Batteriemodulgehäuse (110), welches um die Mehrzahl von Batteriezellen (102) umlaufend angeordnet ist; und einem oder mehreren Zentrierelementen (120a, 120b), die an einer oder mehreren Außenseiten (110a, 110b, 110c, 110d) des Batteriemodulgehäuses (110) angeordnet sind;
Stapeln (502) der Batteriemodule (100) zu einem Batteriemodulstapel (150), wobei beim Stapeln (502) die Batteriemodulgehäuse (110) der jeweiligen Batteriemodule (100) ineinandergreifen und die gestapelten Batteriemodule (100) seitlich umschließen;
Einsetzen (503) des Batteriemodulstapels (150) in ein Gehäuse (300) des Batteriesystems (400), wobei beim Einsetzen die Zentrierelemente (120a, 120b) der jeweiligen Batteriemodulgehäuse (110) den Batteriemodulstapel (150) in dem Gehäuse (300) befestigen und zentrieren.
